# EUROPEAN PATENT APPLICATION

(11) **EP 2 685 383 A1**
(43) Date of publication of application: **15.01.2014**
(21) Application number: 13175534.0
(22) Date of filing: 08.07.2013
(51) Int. Cl.: G06F 11/36, G06F 11/34

(54) **Method and apparatus for unassisted data collection, extraction and report generation and distribution**

(30) Priority: 13.07.2012 US 201213549258
(71) Applicant: Synchronoss Technologies, Inc., Bridgewater, NJ 08807 (US)
(72) Inventor: Impink, Alan, Schwenksville, PA Pennsylvania (US)
(74) Representative: Harris, Ian Richard

(57) **Abstract**

Data is collected at regular intervals from each machine that is being studied. The data is collected concurrently from multiple systems and stored on a single machine which is not part of the study. The data includes metrics related to software and hardware performance and capacity. The data is extracted from a collection database, transformed and aggregated, and is stored in an archive database for reporting purposes. Reports are then generated using the transformed and aggregated data, resulting in a multi-page report document in one or more formats containing text, charts and graphics that is distributed, showing the results of the study to interested parties. The entire process is automated, such that after triggering the initial collection and/or extraction, no user intervention is needed to complete the process, which results in a fully-formatted report document being generated and distributed. Each stage of the process is configurable.

## Description

### CROSS-REFERENCE TO RELATED APPLICATION(S)

This application claims priority under 35 U.S.C. §119(e) of the U.S. Provisional Patent Application Ser. No. 61/662,213, filed June 20, 2012 and titled, "COORDINATED TESTING" which is also hereby incorporated by reference in its entirety for all purposes.

### FIELD OF THE INVENTION

The present invention relates to the field of product testing. More specifically, the present invention relates to performance and capacity testing.

### BACKGROUND OF THE INVENTION

Performance testing is, in general, testing performed to determine how a system performs in terms of responsiveness and stability under a particular workload. Performance testing is able to be used to investigate, measure, validate or verify other quality attributes of a system, such as scalability, reliability and resource usage. Performance testing includes several types such as load testing, stress testing, endurance testing, spike testing, configuration testing and isolation testing.

The results of performance testing typically include large amounts of data. Collecting and organizing the results of the testing is therefore a complicated task. A standard method of collecting and organizing the results is to manually filter, analyze and organize the results which is an inefficient process.

### SUMMARY OF THE INVENTION

Data is collected at regular intervals from each machine that is being studied. The data is collected concurrently from multiple systems and is stored on a single machine which is not part of the study. The data includes metrics related to software and hardware performance and capacity. Upon request, the data is extracted from a collection database, transformed and aggregated as needed, and is stored in an archive database for reporting purposes. One or more reports are then generated using the transformed and aggregated data, resulting in a one or more page report document in one or more formats containing text, charts and graphics that is distributed via email and public file servers, showing the results of the study to interested parties. The entire process is automated, such that after triggering the initial collection and/or extraction, no user intervention is needed to complete the process, which results in a fully-formatted report document being generated and distributed. Each stage of the process is configurable, so that the reporting needs of each application are specifically met.

### BRIEF DESCRIPTION OF THE DRAWINGS

Figure 1 illustrates a diagram of a system for unassisted data collection, extraction and report generation and distribution according to some embodiments.
Figure 2 illustrates an example dim_stat table according to some embodiments.
Figure 3 illustrates a block diagram of an example computing device configured to implement the unassisted data collection, extraction and report generation and distribution method according to some embodiments.
Figure 4 illustrates a diagram of an example performance test setup to implement the unassisted data collection, extraction and report generation and distribution according to some embodiments.
Figure 5 illustrates a flowchart of a method of implementing unassisted data collection, extraction and report generation and distribution according to some embodiments.

### DETAILED DESCRIPTION OF THE PREFERRED EMBODIMENT

Data is collected at regular intervals from each machine that is being studied. The data is collected concurrently from multiple systems and stored on a single machine which is not part of the study. The data includes metrics related to software and hardware performance and capacity. The data is extracted from a collection database, transformed and aggregated as needed, and is stored in an archive database for reporting purposes. One or more reports are then generated using the transformed and aggregated data, resulting in a report document in one or more formats containing text, charts and graphics that is distributed via email and public file servers, showing the results of the study to interested parties. The entire process is automated, such that after triggering the initial collection and/or extraction, no user intervention is needed to complete the process, which results in a fully-formatted report document being generated and distributed. In some embodiments, the initial trigger is automated (e.g. by being incorporated in a test process). Each stage of the process is configurable, so that the reporting needs of each application are specifically met.

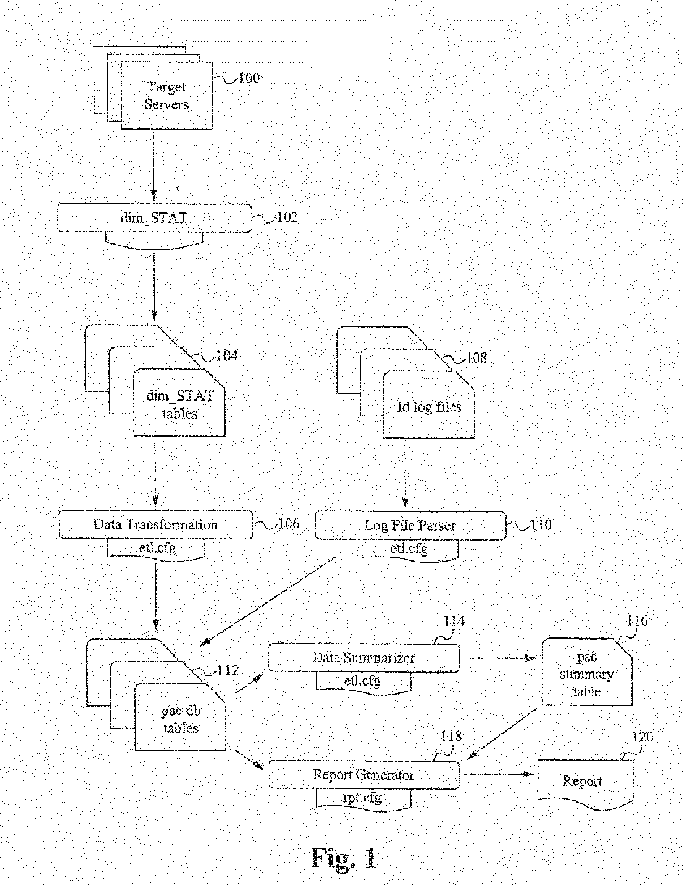

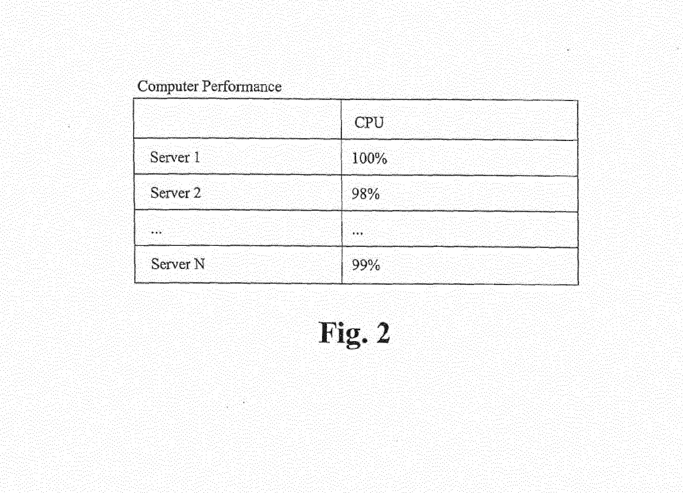

Figure 1 illustrates a diagram of a system for unassisted data collection, extraction and report generation and distribution according to some embodiments. A number of target servers 100 (e.g., N servers, wherein N is a large number such as 100 or more) are used in a testing configuration. Each server of the target servers has a data collection component. A data collection component is very lightweight and sends data over a network to a single machine that stores the data in a data structure 102 (e.g., a database). A large amount of data is collected at each collection interval (e.g, every 30 seconds). The data structure 102 is represented by dim_STAT. A set of tables 104, referred to as dim_stat tables, is used wherein each one of the tables has data for every one of the servers. There are multiple classifications for the kind of data (e.g., for computer performance there is CPU data, memory allocation and usage data and others) stored in separate tables. Figure 2 illustrates an example dim_stat table. A data transformation component 106 performs extraction, transformation and loading separately for each kind of product being tested. In some embodiments, the data transformation component 106 is configured for a specific product. The data transformation component 106 retrieves information from the set of tables 104, aggregates the data and automatically determines which systems comprise the network elements (e.g., each functional part of a large scale system). For example, 10 servers perform 1 function, the data on each of the 10 servers is individually loaded in the data structure 102 for a period of time interested in, but is also aggregated across all of the machines that comprise the network element, so a single value for each metric that is able to be used for a network element for a test is obtained. Log files 108 are identified, and a log file parser 110 parses out additional information that is able to be used in generating a report. The information from the data transformation component 106 with the additional parsed information is stored in a Performance and Capacity (PAC) db table 112. The transformed data and the parsed information are run through a summarizer component 114 which will give a sum, average and other statistical aggregates for the network element for a steady state aspect of a test. For example, a test includes several aspects: once the test is started, there is ramp up time, steady state, ramp down time and then the test ends. Preferably, the ramp up and ramp down aspects of the test are ignored and the steady state is summarized and stored in PAC summary table 116. A report generator component 118 retrieves data from the PAC summary table 116 and extracted detailed data from the PAC data base table 112 and generates a report file 120 (e.g. pdf or html output). The report file 120 is then distributed as desired.

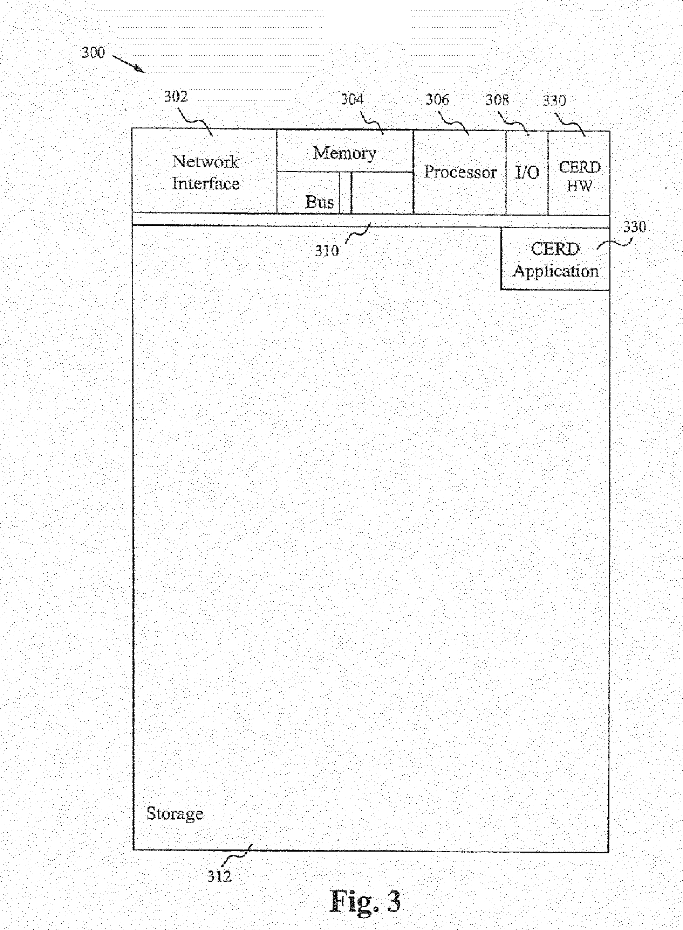

Figure 3 illustrates a block diagram of an example computing device configured to implement the unassisted data collection, extraction and report generation and distribution method according to some embodiments. The computing device 300 is able to be used to acquire, store, compute, process, communicate and/or display information. For example, a computing device 300 is able to be used for receiving, retrieving, extracting, generating and distributing data. In general, a hardware structure suitable for implementing the computing device 300 includes a network interface 302, a memory 304, a processor 306, I/O device(s) 308, a bus 310 and a storage device 312. The choice of processor is not critical as long as a suitable processor with sufficient speed is chosen. The memory 304 is able to be any conventional computer memory known in the art. The storage device 312 is able to include a hard drive, CDROM, CDRW, DVD, DVDRW, Blu-Ray®, flash memory card or any other storage device. The computing device 300 is able to include one or more network interfaces 302. An example of a network interface includes a network card connected to an Ethernet or other type of LAN. The I/O device(s) 308 are able to include one or more of the following: keyboard, mouse, monitor, display, printer, modem, touchscreen, button interface and other devices. In some embodiments, the hardware structure includes multiple processors and other hardware to perform parallel processing. Data collection, extraction and report generation and distribution application(s) 330 used to perform the data collection, extraction and report generation and distribution method are likely to be stored in the storage device 312 and memory 304 and processed as applications are typically processed. More or fewer components shown in Figure 3 are able to be included in the computing device 300. In some embodiments, data collection, extraction and report generation and distribution hardware 320 is included. Although the computing device 300 in Figure 3 includes applications 330 and hardware 320 for implementing the data collection, extraction and report generation and distribution method, the data collection, extraction and report generation and distribution method is able to be implemented on a computing device in hardware, firmware, software or any combination thereof. For example, in some embodiments, the data collection, extraction and report generation and distribution applications 330 are programmed in a memory and executed using a processor. In another example, in some embodiments, the data collection, extraction and report generation and distribution hardware 320 is programmed hardware logic including gates specifically designed to implement the method.

In some embodiments, the data collection, extraction and report generation and distribution application(s) 330 include several applications and/or modules. In some embodiments, modules include one or more sub-modules as well.

Examples of suitable computing devices include a personal computer, a laptop computer, a computer workstation, a server, a mainframe computer, a handheld computer, a personal digital assistant, a cellular/mobile telephone (e.g. an iPhone®), a smart appliance, a tablet computer (e.g. an iPad®) or any other suitable computing device.

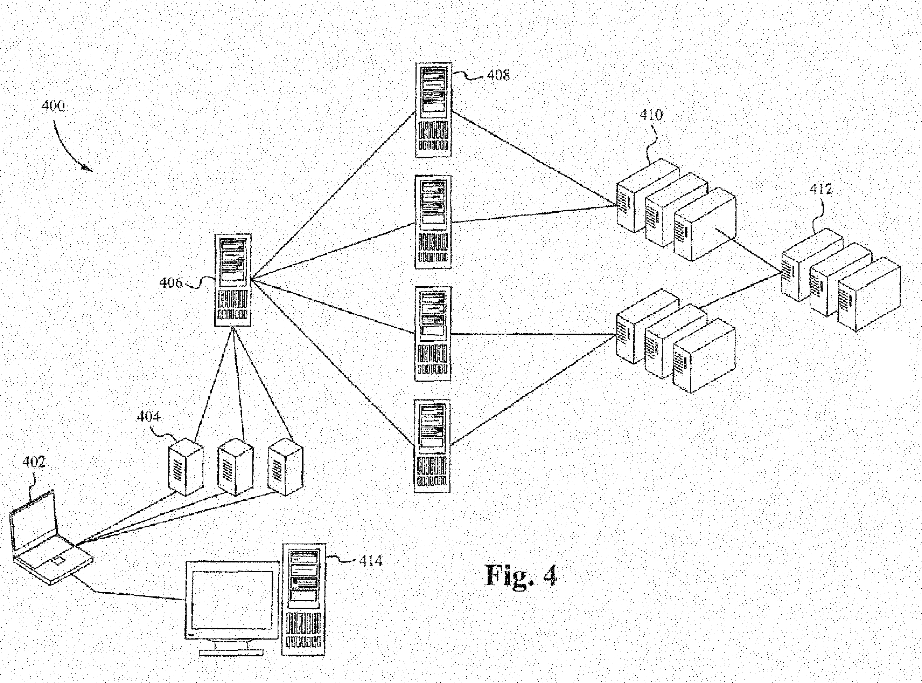

Figure 4 illustrates a diagram of an example performance test setup to implement the unassisted data collection, extraction and report generation and distribution according to some embodiments. The exemplary test setup 400 includes a controller 402, load generators 404, a load balancer 406, web servers 408, application servers 410 and a database servers 412. The controller 402 launches the load test. In some embodiments, the controller 402 also runs the unassisted data collection, extraction, report generation and distribution program as described herein. In some embodiments, a separate device 414 runs the unassisted data collection, extraction, report generation and distribution program as described herein. The load generators 404 simulate loads such as users accessing a website. The load balancer 406 distributes the load to the web servers 408. The web servers 408 perform web serving duties which involves accessing data from the application servers 410. The application servers 410 serve the applications which access data from the database server 412. Other processes and tasks are performed by the respective devices as desired or needed. In some embodiments, fewer or additional devices are utilized.

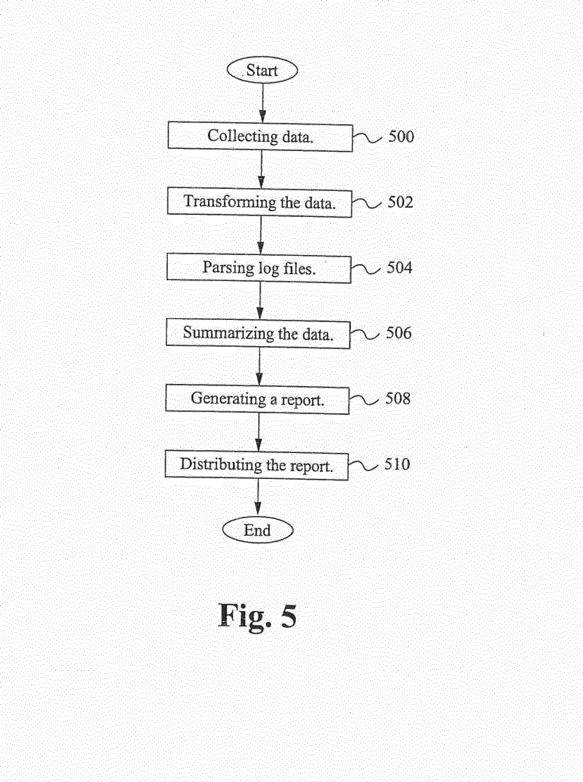

Figure 5 illustrates a flowchart of a method of implementing unassisted data collection, extraction and report generation and distribution according to some embodiments. After a test is launched, data is collected, in the step 500. A data collection component collects and sends data over a network to one or more machines that store the data in a data structure. The data is collected at specified intervals. The data is stored in tables, where each table has a specific set of data (e.g. CPU performance data) for every one of the servers used in the test. In the step 502, the data is transformed. In some embodiments, transforming the data includes extraction from a first database, transformation of the data and loading the transformed data in a target database. The transforming occurs separately for each kind of product being tested. The transforming also includes aggregating the data. In the step 504, log files are parsed for additional information. In the step 506, the transformed data and additional information (if desired), is summarized. Summarization includes generating a sum, average and/or any other mathematical or statistical information. In the step 508, a report is generated from the summarized data. The report file is able to be in any format (e.g., pdf or html). In the step 510, the report is distributed. For example, the report is stored on a server for accessing and/or emailed to other users. In some embodiments, more or fewer steps are implemented. In some embodiments, the order of the steps is modified. Any of the steps described herein are able to be performed automatically or manually.

To utilize the unassisted data collection, extraction and report generation and distribution method, a user installs, configures and/or initiates a collection, extraction and report generation and distribution program which automatically collects data, extracts specific data, generates a report with the extracted data and distributes the report.

In operation, end-to-end automation of the process from data extraction to report distribution speeds delivery, reduces the risk of inaccuracies and generates reproducible results. The end-to-end time of completion from initial report request to final report distribution has been reduced from multiple days to less than one hour. In a scaled-down test (e.g. 5 servers), manual extraction and reporting is feasible; however, in a full-scale test (e.g. 100 or more servers), an automated process is extremely beneficial.

Aspects of the subject matter described herein are set out in the following numbered clauses:
1. A method of implementing unassisted data collection, extraction and report generation and distribution programmed in a memory of a device comprising:
   a. collecting data and storing the data in a plurality of tables, wherein each table contains a metric from every server used in a test;
   b. transforming the data;
   c. summarizing the data;
   d. generating a report based on the summarized data; and
   e. distributing the report.
2. The method of clause 1 wherein the data is collected at regular intervals.
3. The method of clause 1 or clause 2 wherein the data is collected concurrently from a plurality of devices.
4. The method of any one of the preceding clauses wherein the data comprises software and hardware performance and capacity data.
5. The method of any one of the preceding clauses wherein transforming comprises extraction, transformation and loading.
6. The method of any one of the preceding clauses wherein the data is collected from N servers, where N is 100 or greater.
7. The method of any one of the preceding clauses further comprising aggregating the data from the tables by determining network elements, wherein the network elements are each a group of servers for performing a specific task, further wherein individual server data is loaded and is aggregated across all of the servers of a network element to generate a single value for each metric of the network element.
8. The method of clause 7 wherein additional information from parsed log data, the single value and the individual server data are summarized.
9. The method of any one of the preceding clauses further comprising parsing log data to determine additional information.
10. The method of any one of the preceding clauses wherein distributing the report is by email.
11. A method of implementing unassisted data collection, extraction and report generation and distribution programmed in a memory of a device comprising:
   a. collecting data and storing the data in a plurality of tables, wherein each table contains a metric from every server used in a test;
   b. transforming the data;
   c. aggregating the data from the plurality of tables by determining network elements, wherein the network elements are each a group of servers for performing a specific task, wherein individual server data is loaded and is aggregated across all of the servers of a network element to generate a single value for each metric of the network element;
   d. summarizing the individual server data and the single value for each metric;
   e. generating a report based on the summarized data; and
   f. distributing the report.
12. The method of clause 11 wherein the data is collected at regular intervals.
13. The method of clause 11 or clause 12 wherein the data is collected concurrently from a plurality of devices.
14. The method of any one of clauses 11 to 13 wherein the data comprises software and hardware performance and capacity data.
15. The method of any one of clauses 11 to 14 wherein transforming comprises extraction, transformation and loading.
16. The method of any one of clauses 11 to 15 wherein the data is collected from N servers, where N is 100 or greater.
17. The method of any one of clauses 11 to 16 further comprising parsing log data to determine additional information.
18. The method of clause 17 wherein the additional information, the single value and the individual server data are summarized.
19. The method of any one of clauses 11 to 18 wherein distributing the report is by email.
20. An apparatus comprising:
   a. a non-transitory memory for storing an application, the application for automatically:
      i. collecting data at regular intervals and storing the data in a plurality of tables, wherein each table contains a metric from every server used in a test;
      ii. transforming the data;
      iii. aggregating the data from the plurality of tables by determining network elements, wherein the network elements are a group of servers for performing a specific task, wherein individual server data is loaded and is aggregated across all of the servers of a network element to generate a single value for each metric of the network element;
      iv. comprising parsing log data to determine additional information;
      v. summarizing the individual server data, the single value for each metric and the additional information;
      vi. generating a report based on the summarized data; and
      vii. distributing the report; and
   b. a processing component coupled to the memory, the processing component configured for processing the application.
21. The apparatus of clause 20 wherein the data is collected concurrently from a plurality of devices.
22. The apparatus of clause 20 or clause 21 wherein the data comprises software and hardware performance and capacity data.
23. The apparatus of any one of clauses 20 to 22 wherein transforming comprises extraction, transformation and loading.
24. The apparatus of any one of clauses 20 to 23 wherein the data is collected from N servers, where N is 100 or greater.
25. The apparatus of any one of clauses 20 to 24 wherein distributing the report is by email.

The present invention has been described in terms of specific embodiments incorporating details to facilitate the understanding of principles of construction and operation of the invention. Such reference herein to specific embodiments and details thereof is not intended to limit the scope of the claims appended hereto. It will be readily apparent to one skilled in the art that other various modifications may be made in the embodiment chosen for illustration without departing from the spirit and scope of the invention as defined by the claims.

## Claims

1. A method of implementing unassisted data collection, extraction and report generation and distribution programmed in a memory of a device comprising:
a. collecting data and storing the data in a plurality of tables, wherein each table contains a metric from every server used in a test;
b. transforming the data;
c. summarizing the data;
d. generating a report based on the summarized data; and
e. distributing the report.

2. The method of claim 1, wherein the data is collected at regular intervals.

3. The method of claim 1 or claim 2, wherein the data is collected concurrently from a plurality of devices.

4. The method of any one of the preceding claims wherein the data comprises software and hardware performance and capacity data.

5. The method of any one of the preceding claims wherein transforming comprises extraction, transformation and loading.

6. The method of any one of the preceding claims wherein the data is collected from N servers, where N is 100 or greater.

7. The method of any one of the preceding claims further comprising aggregating the data from the tables by determining network elements, wherein the network elements are each a group of servers for performing a specific task, further wherein individual server data is loaded and is aggregated across all of the servers of a network element to generate a single value for each metric of the network element.

8. The method of claim 7 wherein additional information from parsed log data, the single value and the individual server data are summarized.

9. The method of any one of the preceding claims further comprising parsing log data to determine additional information.

10. The method of any one of the preceding claims wherein distributing the report is by email.

11. An apparatus comprising:
a. a non-transitory memory for storing an application, the application for automatically:
i. collecting data at regular intervals and storing the data in a plurality of tables, wherein each table contains a metric from every server used in a test;
ii. transforming the data;
iii. aggregating the data from the plurality of tables by determining network elements, wherein the network elements are a group of servers for performing a specific task, wherein individual server data is loaded and is aggregated across all of the servers of a network element to generate a single value for each metric of the network element;
iv. comprising parsing log data to determine additional information;
v. summarizing the individual server data, the single value for each metric and the additional information;
vi. generating a report based on the summarized data; and
vii. distributing the report; and
b. a processing component coupled to the memory, the processing component configured for processing the application.

12. The apparatus of claim 11 wherein the data is collected concurrently from a plurality of devices.

13. The apparatus of claim 11 or claim 12 wherein the data comprises software and hardware performance and capacity data.

14. The apparatus of any one of claims 11 to 13 wherein transforming comprises extraction, transformation and loading.

15. The apparatus of any one of claims 11 to 14 wherein the data is collected from N servers, where N is 100 or greater.
